# DEMANDE DE BREVET EUROPEEN

(11) **EP 2 961 029 A1**
(43) Date de publication de la demande: **30.12.2015**
(21) Numéro de dépôt: 15173434.0
(22) Date de dépôt: 23.06.2015
(51) Int. Cl.: H02J 9/06, H02J 7/34, G06F 1/30

(54) **MODULE DE COMPENSATION DE MICROCOUPURES D'ALIMENTATION ELECTRIQUE D'UN SERVEUR**

(30) Priorité: 27.06.2014 FR 1456044
(71) Demandeur: BULL SAS, 78340 Les Clayes sous Bois (FR)
(72) Inventeur: Lecourtier, Georges, 78000 VERSAILLES (FR)
(74) Mandataire: Hirsch & Associés

(57) **Abrégé**

L'invention concerne un module de compensation de microcoupures d'alimentation électrique d'au moins un serveur, comprenant au moins un élément capacitif de stockage (12) d'énergie électrique ensuite libérable pour compenser lesdites microcoupures, caractérisé en ce qu'il comporte aussi un contrôleur (10) de la charge et/ou de la décharge dudit élément capacitif de stockage (12), limitant le courant de charge et/ou de décharge dudit élément capacitif de stockage (12) suffisamment pour rendre ledit module insérable et/ou extractible même pendant le fonctionnement dudit serveur.

## Description

### DOMAINE DE L'INVENTION

L'invention concerne le domaine des modules de compensation de microcoupures d'alimentation électrique et le domaine des ordinateurs intégrant de tels modules de compensation.

### CONTEXTE DE L'INVENTION

Selon un premier art antérieur, il est connu des systèmes électroniques dans lesquels la défaillance des dispositifs d'alimentation électrique est traitée au niveau courant alternatif (AC pour « Alternating Current » en langue anglaise). Par exemple, un groupe d'alimentation qui ne peut être interrompue (UPS pour « Uninterruptible Power Supply » en langue anglaise) contient un redresseur, des batteries et un onduleur pour pallier à des interruptions de quelques minutes de la puissance électrique en courant alternatif fournie par le secteur. Pour supporter une panne du convertisseur de tension alternative en tension continue (ACDC pour « Alternative Current Direct Current » en langue anglaise) ou de l'unité d'alimentation (PSU pour « Power Supply Unit » en langue anglaise), celui-ci peut être redondé, par exemple selon un schéma 1+1. Dans cette hypothèse, les deux sorties des unités d'alimentation sont reliées entre elles au niveau de la carte mère de l'équipement de traitement de l'information pour former un rail d'alimentation en courant continu, par exemple un rail de 12V. Ce rail de 12V alimente en aval un certain nombre de points de charges qui sont des convertisseurs de tension continue en tension continue fournissant les différentes tensions d'alimentation des circuits intégrés. Les cartes mères supportent plusieurs dizaines de points de charge différents dont la puissance de sortie s'échelonne pour chacun entre quelques centaines de milliwatts et quelques watts. Dans un tel système, la défaillance d'un seul point de charge conduit généralement à une erreur fatale qui entraîne la perte des données en mémoire volatile.

Selon un deuxième art antérieur, il est connu d'utiliser un système de secours d'alimentation électrique basé sur un module de compensation de microcoupures d'alimentation électrique qui concerne la fiabilité et la disponibilité des systèmes dans lesquels il est intégré. Il s'applique aux systèmes de traitement des informations qui contiennent en général des dispositifs de mémoire volatile et des dispositifs d'alimentation électrique. Sans un module de compensation, toute défaillance majeure du dispositif d'alimentation électrique entraîne la perte des données stockées dans les mémoires volatiles. Ce module de compensation remplit la fonction d'un dispositif de secours d'alimentation électrique permettant d'assurer à la fois une sauvegarde automatique des données et une maintenabilité aisée du système de sauvegarde associé. La maintenance de ce type de module de compensation est délicate. En effet, lorsque les éléments capacitifs de stockage de ce type de module de compensation doivent être changés ou vérifiés, le module ne peut être extrait que lorsque l'ensemble du système est à l'arrêt, c'est-à-dire ne fonctionne pas. Les serveurs du système doivent donc être éteints.

### RESUME DE L'INVENTION

Le but de la présente invention est de fournir un module de compensation des microcoupures d'alimentation électrique palliant au moins partiellement les inconvénients précités.

Plus particulièrement, l'invention vise à fournir un module de compensation des microcoupures d'alimentation électrique permettant de l'extraire subitement du système, même pendant le fonctionnement dudit serveur ou desdits serveurs du système. On parle également « d'extraction à chaud ».

Plus particulièrement, l'invention vise aussi à fournir un module de compensation des microcoupures d'alimentation électrique permettant de le réinsérer subitement dans le système, même pendant le fonctionnement dudit serveur ou desdits serveurs du système. On parle également de « réinsertion à chaud ».

Les éléments capacitifs de stockage étant des éléments capacitifs capables de stocker une énergie importante, en particulier lorsque ce sont par exemple des super condensateurs, leur extraction puis réinsertion « à chaud », c'est-à-dire pendant le fonctionnement du ou des serveurs gérés par le module de compensation qui les contient, semble une gageure.

En effet, leur capacité importante entraînant le stockage de quantités d'énergie importantes, de plus rapidement libérables en raison de leur aspect capacitif, rend élevé le risque d'appel de courant excessif entraînant un effondrement momentané du niveau de tension de l'alimentation électrique, et par conséquent rend aussi élevé le risque de dysfonctionnement du système, lors d'une « extraction à chaud » et ou lors d'une « insertion à chaud ». Il existe donc un préjugé technique à l'encontre d'une « extraction à chaud » et ou d'une « insertion à chaud » d'un composant comprenant un ou plusieurs éléments capacitifs de stockage d'énergie électrique présentant une capacité de stockage élevée.

L'invention s'attache à renverser ce préjugé technique en intégrant une limitation de courant de charge et ou de décharge du ou des éléments capacitifs de stockage et une gestion de cette limitation de courant par un contrôleur, rendant ainsi possible leur « extraction et ou insertion à chaud », sans risque notable d'appel de courant excessif pouvant entraîner une perturbation notable de l'alimentation électrique du système laquelle pourrait à son tour entraîner un dysfonctionnement des serveurs et une perte de données en mémoire volatile dans ce ou dans ces serveurs.

A cette fin, la présente invention propose un module de compensation de microcoupures d'alimentation électrique d'au moins un serveur, comprenant au moins un élément capacitif de stockage d'énergie électrique ensuite libérable pour compenser lesdites microcoupures, caractérisé en ce qu'il comporte aussi un contrôleur de la charge et/ou de la décharge dudit élément capacitif de stockage, limitant le courant de charge et/ou de décharge dudit élément capacitif de stockage suffisamment pour rendre ledit module insérable et/ou extractible même pendant le fonctionnement dudit serveur.

A cette fin, la présente invention propose également un ordinateur comprenant : un ou plusieurs microprocesseurs, plusieurs mémoires duales comprenant chacune une mémoire vive, une mémoire non volatile, et un contrôleur adapté pour sauvegarder le contenu de la mémoire vive dans la mémoire non volatile et pour reconfigurer la mémoire vive avec le contenu de la mémoire non volatile, un rail principal d'alimentation électrique desdits microprocesseurs et desdites mémoires duales pendant le fonctionnement dudit ordinateur sans microcoupure d'alimentation, destiné à être relié à une alimentation extérieure, un rail secondaire d'alimentation électrique desdites mémoires duales pendant le fonctionnement dudit ordinateur au moins lors du dépassement d'une durée prédéterminée de microcoupure d'alimentation, ledit rail secondaire d'alimentation n'alimentant pas les microprocesseurs, un module de compensation de microcoupures d'alimentation électrique selon l'invention dans lequel l'élément capacitif de stockage d'énergie électrique est adapté pour fournir de l'énergie électrique, audit rail principal d'alimentation, lors des microcoupures d'alimentation, mais uniquement pendant ladite durée prédéterminée de microcoupure d'alimentation, et est aussi adapté pour fournir de l'énergie électrique, audit rail secondaire d'alimentation, lors des microcoupures d'alimentation, après le dépassement de ladite durée prédéterminée de microcoupure d'alimentation. Le rail secondaire d'alimentation est aussi appelé rail d'alimentation de secours.

Une microcoupure d'alimentation correspond à une interruption brève du secteur fournissant un courant alternatif.

L'Ordinateur selon l'invention ou selon des modes de réalisation préférentiels de l'invention peut utiliser un module de compensation de microcoupures d'alimentation électrique est selon l'invention ou selon des modes de réalisation préférentiels de l'invention. L'ordinateur peut être un serveur géré par un module de compensation. Un même module de compensation pourrait aussi gérer plusieurs serveurs.

Le module de compensation de microcoupures d'alimentation électrique d'un serveur, se connecte directement dans la carte d'alimentation, sans nécessiter de câbles entre ce module de compensation et cette carte d'alimentation.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets précités.

De préférence, le module de compensation comporte aussi un interrupteur d'alimentation auxiliaire reliant ledit contrôleur audit élément capacitif de stockage et changeant d'état, lors de l'extraction dudit module pendant le fonctionnement dudit serveur, de manière à ce que ledit contrôleur soit alimenté par ledit élément capacitif de stockage. Ainsi, lors d'une microcoupure d'alimentation, cette quasi « auto-alimentation » temporaire du contrôleur, en fait par le ou les éléments capacitifs de stockage voisins dudit contrôleur dans le module de compensation, permet à ce contrôleur d'assurer le séquencement des opérations de gestion des microcoupures d'alimentation, et ceci alors que ce contrôleur est victime lui aussi, comme les autres éléments du réseau, de cette microcoupure à gérer. Lors de l'extraction dudit module pendant le fonctionnement dudit serveur, signifie ici préférentiellement au début de l'extraction dudit module, avant que l'extraction dudit module ne soit effective et achevée, le temps de gérer correctement cette extraction dudit module.

De préférence, le module de compensation comporte aussi un interrupteur de décharge qui relie une résistance de décharge audit élément capacitif de stockage et qui est piloté par ledit contrôleur lors de l'extraction dudit module pendant le fonctionnement dudit serveur. Le ou les éléments capacitifs de stockage sont capables de stocker une énergie importante pour alimenter au moins le contrôleur le temps nécessaire pour gérer une microcoupure et pour pouvoir alimenter des mémoires duales le temps nécessaire pour sauvegarder les données. Cette énergie stockée pouvant donc être importante, elle peut être source de danger pour l'opérateur qui l'extrait subitement. La résistance de décharge permet de décharger l'essentiel de cette énergie de manière à rendre sans risque notable pour l'opérateur la manipulation de ce module de compensation lors d'une extraction subite, encore appelée « extraction à chaud ».

De préférence, le module de compensation comprend plusieurs éléments capacitifs de stockage et/ou il compense les microcoupures d'alimentation survenant sur un rail d'alimentation de un ou de plusieurs serveurs. Ainsi, un seul module de compensation peut suffire pour gérer un réseau électrique.

De préférence, le ou les éléments capacitifs de stockage sont disposés de manière à fournir une alimentation électrique de secours à la fois lors d'une microcoupure et lors d'une sauvegarde du contenu d'une ou plusieurs mémoires volatiles vers une ou plusieurs mémoires non volatiles. A ces fonctions d'alimentation électrique de secours, se rajoute alors la fonction d'alimentation électrique temporaire du contrôleur du module de compensation, lors d'une extraction et ou d'une insertion « à chaud », de ce module de compensation.

De préférence, le ou les éléments capacitifs de stockage comprennent un ou plusieurs super condensateurs. Les super condensateurs, quoique de capacité plus limitée que d'autres sources d'énergie, par exemple de nature électrochimique, peuvent toutefois délivrer leur puissance crête un bien plus grand nombre de fois pendant la durée de vie du système, et donc gérer un nombre nettement plus important de microcoupures d'alimentation.

De préférence, le module de compensation comporte une première borne d'alimentation qui est destinée à être reliée à une alimentation extérieure et qui est reliée audit élément capacitif de stockage de manière à permettre leur charge en provenance de ladite première borne d'alimentation et leur décharge vers ladite première borne d'alimentation et une deuxième borne d'alimentation qui est destinée à être reliée à ladite alimentation extérieure et qui est reliée audit contrôleur de manière à alimenter en énergie électrique ledit contrôleur. Le ou les éléments capacitifs de stockage emmagasinent ainsi de l'énergie en provenance du secteur lors du fonctionnement normal de celui-ci, énergie qu'ils peuvent ensuite restituer au contrôleur lors d'une microcoupure d'alimentation.

De préférence, le module de compensation ne comporte aucune capacité de décyclage qui est reliée à ladite première borne d'alimentation et dont la valeur dépasse 500 nanofarads. Ainsi la gestion un peu complexe de ces capacités ne vient pas gêner ou compliquer la gestion de la microcoupure d'alimentation par le module de compensation, ni la gestion de l'extraction « à chaud » de ce module de compensation.

De préférence, le module de compensation comporte une première borne d'alimentation qui est destinée à être reliée à une alimentation extérieure, un convertisseur principal de tension continue en tension continue qui est situé entre ledit élément capacitif de stockage et ladite première borne d'alimentation et qui comprend un limiteur de courant intégré lequel est activé lors de l'insertion dudit module pendant le fonctionnement dudit serveur. Ainsi, le risque d'un appel de courant excessif, qui pourrait être provoqué par la charge non contrôlée du ou des éléments capacitifs de stockage, et qui pourrait entraîner une chute notable de tension sur le rail principal d'alimentation, est évité.

L'alimentation électrique extérieure intègre, quant à elle, un convertisseur de tension alternative en tension continue, lequel convertisseur est situé entre le réseau électrique d'entrée et ladite première borne.

De préférence, le module de compensation comporte une deuxième borne d'alimentation qui est destinée à être reliée à une alimentation extérieure, un convertisseur secondaire de tension continue en tension continue et un limiteur de courant qui sont situés entre ledit contrôleur et ladite deuxième borne d'alimentation. Ainsi, en fonctionnement normal du secteur, le contrôleur est alimenté par l'intermédiaire du secteur, sans pic excessif de courant.

De préférence, ledit contrôleur comprend une fonction de détection d'une extraction subite dudit module laquelle fonction est reliée à une broche qui est plus courte que les autres broches de manière à indiquer l'opération d'extraction subite avant que celle-ci ne soit complètement réalisée. Ainsi le contrôleur détecte et peut gérer très tôt une opération d'extraction subite des éléments capacitifs de stockage avant même que celle-ci ne soit effective et donc avant même d'être privé de l'alimentation électrique en provenance de ces éléments capacitifs de stockage. Ceci est permis par la longueur différente des broches d'enfichage du module de compensation dans l'ordinateur.

De préférence, ledit contrôleur comprend une fonction de détection desdites microcoupures laquelle fonction envoie une ou plusieurs demandes de réduction de consommation électriques à un ou plusieurs serveurs dès qu'une microcoupure est détectée. Ainsi, dès la détection d'une microcoupure la plupart des éléments électriques gérés par le contrôleur vont rapidement réduire leur consommation électrique, permettant aux éléments capacitifs de stockage de gérer même des microcoupures d'alimentation qui durent, et ceci, malgré leur capacité de stockage d'énergie qui reste relativement limitée par rapport aux sources d'alimentation classique, par exemple de type électrochimique.

De préférence, le module de compensation est insérable et/ou extractible même pendant le fonctionnement dudit ou desdits serveurs.

De préférence, ledit ou au moins certains desdits serveurs comprennent chacun un ou plusieurs microprocesseurs et/ou une ou plusieurs mémoires.

De préférence, ladite mémoire vive est une mémoire DRAM et ladite mémoire non volatile est une mémoire FLASH.

De préférence, ledit ordinateur est un supercalculateur comprenant plusieurs microprocesseurs.

Plus le système, dépendant d'une même alimentation électrique par secteur et étant géré par un même module de compensation des microcoupures de cette alimentation électrique, est complexe et ou contient des données sensibles à sauvegarder, plus le module de compensation selon l'invention, particulièrement efficace pour une complexité et une consommation électrique relativement réduites, est intéressant.

Selon des modes de réalisation préférentiels de l'invention, le module de compensation des microcoupures d'alimentation électrique permet, par rapport à une solution de sauvegarde sur disque de type SSD, de limiter au strict minimum la consommation du système pendant l'opération critique pendant laquelle les processeurs et les circuits d'entrée sortie ne sont pas alimentées, seule la mémoire étant alimentée. La taille et le coût des éléments capacitifs de stockage sont ainsi fortement réduits.

Selon des modes de réalisation préférentiels de l'invention, le module de compensation des microcoupures d'alimentation électrique permet, par rapport à une solution de stockage d'énergie sur batterie électrochimique, par exemple de type Lithium-Ion ou Plomb, de continuer à délivrer la puissance crête, laquelle est par exemple d'un niveau de 1400W (soit environ 120A sous 12V), jusqu'à 500.000 fois pendant la durée de vie du système, alors que celle-ci est limitée à seulement environ 1000 fois pour les batteries électrochimiques.

Selon des modes de réalisation préférentiels de l'invention, le module de compensation des microcoupures d'alimentation électrique permet, par rapport à une solution où le groupe d'éléments capacitifs de stockage est chargé à une tension nettement supérieure à la tension d'alimentation extérieure, de se passer de convertisseur de puissance entre le niveau de tension de charge des éléments capacitifs de stockage et le niveau de tension de l'alimentation extérieure. Ceci permet de réduire le coût et l'encombrement de l'implémentation de l'interrupteur principal du module de compensation lequel peut alors se réduire à un seul transistor de puissance fonctionnant en mode de commutation. Cet unique transistor ne provoquera alors qu'une élévation de température du silicium très réduite.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de bloc diagramme d'une carte mère d'un ordinateur utilisant un module de compensation de microcoupures d'alimentation électrique selon un mode de réalisation de l'invention.
La figure 2 représente schématiquement un exemple de bloc diagramme d'une carte d'un module de compensation de microcoupures d'alimentation électrique selon un mode de réalisation de l'invention.
La figure 3 représente schématiquement un exemple convertisseur de tension continue en tension continue selon un mode de réalisation de l'invention.

### DESCRIPTION DETAILLEE DE L'INVENTION

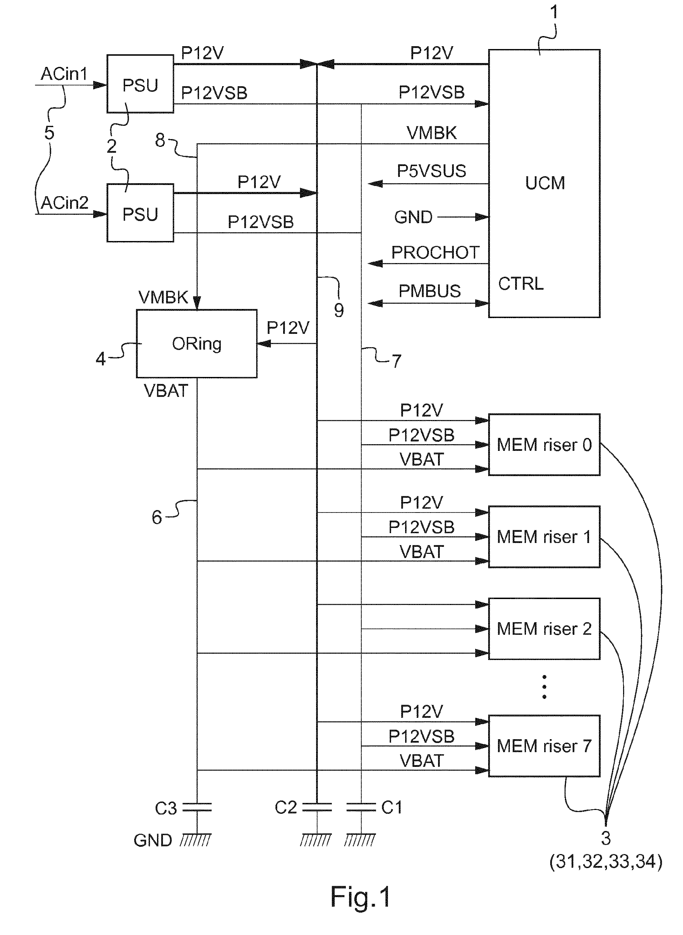

La figure 1 représente schématiquement un exemple de bloc diagramme d'une carte mère d'un ordinateur utilisant un module de compensation de microcoupures d'alimentation électrique selon un mode de réalisation de l'invention. Un ordinateur ou un serveur seront utilisés indifféremment pour recouvrir le même type de dispositif. L'ordinateur comprenant ce module de compensation va pouvoir à la fois supporter les interruptions courtes des entrées secteur sans altération du fonctionnement du système, supporter les interruptions longues des entrées secteur sans perte des données de mémoire volatile, supporter les pannes simples (par opposition au pannes multiples) de la majorité des points de charge et des modules d'alimentation sans perte des données, supporter la maintenance par échange « à chaud » des modules d'alimentation ainsi que des modules d'éléments capacitifs de stockage du module de compensation.

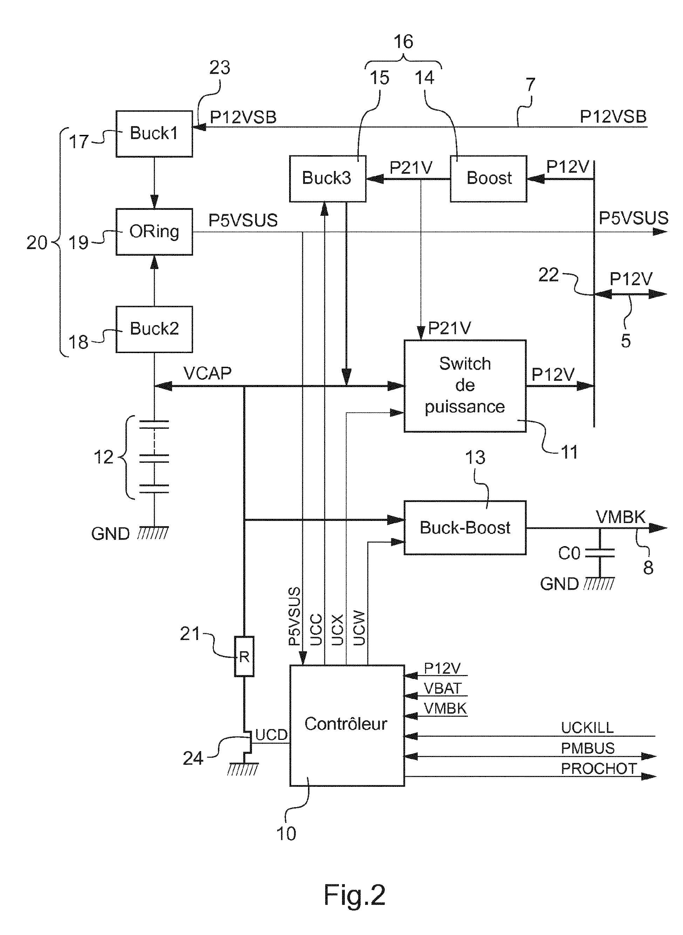

Pour cela, la circuiterie de l'ordinateur et surtout la circuiterie du module de compensation, détaillée au niveau de la figure 2, permettent de détecter l'apparition d'une microcoupure d'alimentation et le basculement sur la source d'énergie locale, de détecter les interruptions longues et de sauvegarder les données volatiles dans une zone de mémoire non volatile, de réaliser l'échange « à chaud » d'un module d'alimentation ou d'un élément capacitif de stockage, ainsi que de redémarrer le système sur les données sauvegardées.

Sur la figure 1, se trouve un module 1 de compensation de microcoupures d'alimentation électrique, plusieurs modules d'alimentation 2, plusieurs cartes mémoire 3, un convertisseur 4 de type ORing, une alimentation extérieure 5 reliée au secteur fournissant un courant alternatif, un rail principal 9 d'alimentation électrique, un rail annexe 7 d'alimentation électrique de démarrage du système, un rail secondaire d'alimentation composé par les tronçons 8 et 6 situés de part et d'autre du convertisseur 4. Chacun des rails 6, 7 et 9 est relié à la terre par l'intermédiaire d'une capacité de découplage.

Les composants 1 à 4 présentent différentes broches reliées à différents signaux électriques. Le signal P12VSB correspond à l'alimentation d'entrée permettant le démarrage du système : sa valeur est 12V. Le signal P5VSUS correspond à l'alimentation de sortie permettant de gérer sur la carte mère les circuits de commande pendant les opérations de sauvegarde : sa valeur est 5V. Cette alimentation de sortie est aussi utilisée dans le module de compensation 1 extractible « à chaud ». Le signal P12V correspond à l'alimentation principale de la carte mère : sa valeur est 12V. Ce rail est utilisé aussi bien en entrée qu'en sortie à l'interface du module de compensation 1. Le signal VMBK correspond à l'alimentation de support ou de soutien, encore appelée alimentation de secours, utilisée pendant les phases de sauvegarde des données. Le signal UCKILL est le signal d'entrée permettant de détecter une extraction « à chaud » ou subite du module de compensation 1. Le signal PMBUS, circulant sur le bus I2C, permet le pilotage du contrôleur du module de compensation 1 par un microprocesseur de maintenance monté sur la carte mère. Le signal PROCHOT est le signal de sortie demandant aux processeurs de la carte mère de commuter dans un mode de consommation réduite pendant une microcoupure d'alimentation.

Les cartes mémoire 3 comprennent chacune une ou plusieurs mémoires duales 31, chacune composée d'une mémoire vive volatile 32 et d'une mémoire non volatile 33, mémoires 32 et 33 toutes deux gérées par un contrôleur 34. La mémoire duale 31 est de type NVDIMM (pour «Non Volatile Dual in Line Memory Module » en langue anglaise). Cette mémoire duale 31, de type NVDIMM, est par exemple constituée de l'association d'une mémoire 32 en technologie DRAM volatile et d'une mémoire 33 en technologie flash non-volatile, associées à un contrôleur 34 embarqué permettant de gérer les sauvegardes et les restaurations de données. Plusieurs entrées d'alimentation fournissent la puissance à chaque mémoire duale 31. Au moins l'une de ces entrées est issue d'une source d'énergie locale. Le nombre de mémoires duales 31 peut être assez important par carte mère, par exemple 48 par serveur. En régime de fonctionnement normal, la puissance consommée par ces mémoires duales 31 peut atteindre un pourcentage significatif de la puissance totale dissipée par le serveur. A titre d'exemple et d'illustration numérique, les 48 mémoires duales 31 dissiperaient 480W pour un serveur de 1400W, soit 34% de la puissance totale dissipée. Par contre, en régime de sauvegarde, la consommation des mémoires duales 31 est beaucoup plus basse, par exemple de l'ordre de 240W, soit 17% de la puissance totale dissipée. L'ensemble de ces mémoires duales 31 sont regroupées sur huit cartes filles de mémoire, chacune supportant jusqu'à six mémoires duales 31 d'une capacité de 4GB et consommant 10W maximum en activité et 5W en sauvegarde, associées à huit cartes filles d'entrée-sortie dissipant chacune une dizaine de watts.

Les deux modules d'alimentation 2 correspondent à deux modules d'alimentation en 12V et disposés en redondance 1+1, possédant une sortie auxiliaire de 12V de veille pour le démarrage qui correspond au signal P12VSB.

L'ordinateur représenté sur le figure 1 comprend également deux emplacements de microprocesseurs de 150W de dissipation chacun (non représentés sur la figure 1), ainsi qu'un module de compensation 1 supportant 5 super condensateurs de 2000F disposés en série. La consommation électrique globale de l'ordinateur en fonctionnement est ainsi de l'ordre de 1400 W.

Ce sont les sources d'alimentation locales qui permettent d'assurer la sauvegarde de l'état du système dans une mémoire non volatile pour toute panne simple des circuits d'alimentation secteur. L'ordinateur représenté à la figure 1 peut ainsi supporter des pannes simples avec un minimum d'impact sur son fonctionnement. Il peut aussi, au besoin, permettre de remplacer les modules défaillants pour éviter d'avoir à subir une seconde panne alors que le système est déjà en mode dégradé. Une microcoupure d'alimentation électrique du secteur est à ce titre considérée comme une panne simple d'alimentation électrique.

Le module de compensation 1 joue le rôle d'une alimentation électrique de secours dans les deux cas suivants, à savoir d'une part pour assurer le fonctionnement de l'ordinateur pendant les interruptions brèves du secteur et d'autre part pour assurer la sauvegarde du contenu des mémoires volatiles dans le cas des interruptions longues du secteur. Le module de compensation 1 joue alors le rôle d'un troisième module d'alimentation électrique qui agit en secours des deux modules d'alimentation électrique 2 standard. Il ajoute à l'interface de ces deux modules d'alimentation électrique 2 un rail secondaire d'alimentation 8 qui est en entrée du convertisseur 4 fournissant la tension de secours au sous-système mémoire. Cette séparation permet la coupure totale de la puissance sur les microprocesseurs, les disques et les circuits d'entrée sortie pendant l'opération de sauvegarde du contenu des mémoires volatiles 32 dans les mémoires non volatiles 33.

La figure 2 représente schématiquement un exemple de bloc diagramme d'une carte d'un module de compensation de microcoupures d'alimentation électrique selon un mode de réalisation de l'invention. Le module de compensation 1 comporte un contrôleur 10, un interrupteur de puissance 11, des éléments capacitifs de stockage 12, un convertisseur 13 de tension continue en tension continue de type abaisseur élévateur, un convertisseur principal 16 de tension continue en tension continue avec un premier étage élévateur 14 et un second étage élévateur 15, un convertisseur 17 de tension continue en tension continue de type abaisseur, un convertisseur 18 de tension continue en tension continue de type abaisseur, un dispositif 19 dont la sortie génère une tension stabilisée P5VSUS d'une valeur de 5V, l'ensemble des éléments 17, 18 et 19, formant un convertisseur secondaire 20 de tension continue en tension continue, une résistance de décharge 21. L'interrupteur de puissance 11 commande l'accès à la première borne 22 d'alimentation reliée à l'alimentation électrique extérieure 5, aussi bien des éléments capacitifs de stockage 12 que du convertisseur principal 16. Le convertisseur 17 est relié à une alimentation électrique 7 par la deuxième borne d'alimentation 23. Le passage du courant de décharge des éléments capacitifs de stockage 12 vers la masse au travers de la résistance de décharge 21 est commandé par le transistor 24 lui-même piloté par le contrôleur 10. Les éléments capacitifs de stockage 12 sont avantageusement des super condensateurs. Le dispositif 19, par exemple de type ORing, intègre à la fois une fonction d'interrupteur d'alimentation auxiliaire et une fonction de limiteur de courant.

L'interface du module de compensation, avec les autres fonctions de la carte mère, est réalisée par les signaux suivants circulant sur les broches correspondantes. L'alimentation P12V est reliée à l'alimentation extérieure 5 reliée aux modules d'alimentation 2 qui sont eux-mêmes équipés de convertisseurs de tension alternative en tension continue et connectés au secteur. Ces deux modules d'alimentation 2 peuvent de préférence fonctionner en redondance 1+1. Le niveau de l'alimentation extérieure 5 est de 12V. Chaque module d'alimentation 2 fournit une alimentation P12VSB de faible puissance permettant le démarrage du système dès que le secteur est présent. Cette alimentation P12VSB présente également une valeur de 12V. L'alimentation de secours VMBK fournie par le module de compensation 1 est connectée au convertisseur 4 qui est décrit dans la figure 1. Le signal UCKILL est connecté à la masse (GND pour « Ground » en langue anglaise) de la carte mère par une broche de type pin plus courte que les autres. L'alimentation P5VSUS et les signaux PROCHOT et PMBUS sont connectés aux fonctions de gestion de puissance de la carte mère qui ne sont pas représentées sur cette figure 2 pour des raisons de simplicité.

Dans le module de compensation 1, un convertisseur secondaire 17 de faible puissance démarre automatiquement à la montée de l'alimentation électrique annexe P12VSB et fournit une première tension auxiliaire P5VSUS au contrôleur 10. L'étage élévateur 14 du convertisseur principal 16 génère une alimentation P21V, d'une valeur de 21V, qui est utilisée par l'étage abaisseur 15 du convertisseur principal 16 et par les circuits de commande des portes de l'interrupteur de puissance 11. Le contrôleur 10 démarre l'étage abaisseur 15 de convertisseur principal 16 pour assurer le chargement des éléments de stockage 12 connectés entre la masse et le rail de puissance VCAP. Sur ce rail de puissance VCAP sont également connectés l'interrupteur de puissance 11, le convertisseur 13 et la résistance de décharge 21. Le contrôleur 10 est capable de gérer l'ensemble des tensions locales comme par exemple P12V, VBAT et VMBK.

Le contrôleur 10 peut être réalisé au moyen d'un circuit de type CPLD (« Complex Programmable Logic Device » en langue anglaise), d'un FPGA (« Field Programmable Gate Array » en langue anglaise), d'un microcontrôleur de type DSP (« Digital Signal Processor » en langue anglaise) ou d'une combinaison de ces éléments. Son rôle est de séquencer les opérations de charge et de décharge des éléments capacitifs de stockage 12 dans les différentes phases de fonctionnement, lesquelles sont la mise sous tension du système, la détection d'une microcoupure d'alimentation secteur, la détection d'une coupure d'alimentation secteur avec ou sans sauvegarde des données sur mémoire non volatile, l'échange « à chaud » du module de compensation 1.

Lors d'une mise sous tension, le convertisseur 17 démarre le contrôleur 10. L'interrupteur de puissance 11 est maintenu à l'état OFF par le signal UCX en provenance du contrôleur 10. Le contrôleur 10 démarre l'étage abaisseur 15 du convertisseur principal 16 au moyen du signal UCC. L'étage abaisseur 15 du convertisseur principal 16 charge à courant constant les éléments capacitifs de stockage 12 jusqu'à leur tension nominale, puis passe en mode flottant. Quand le rail de puissance VCAP atteint un premier seuil déterminé, le convertisseur 18 démarre et vient soutenir le convertisseur 17 au moyen des transistors du dispositif 19 de type ORing dont la sortie est le signal P5VSUS d'une valeur de 5V qui alimente le contrôleur 10. Quand le rail de puissance VCAP atteint un second seuil déterminé, le convertisseur 13 est démarré par le signal UCW du contrôleur 10 et fournit l'alimentation de secours VMBK à la carte mère de l'ordinateur représenté sur la figure 1. Pendant cette mise sous tension, les éléments capacitifs de stockage 12 ont été isolés du rail principal d'alimentation P12V par l'interrupteur de puissance 11. Ils ne mettent donc pas en court-circuit les sorties des modules d'alimentation 2 représentés sur la figure 1. En leur absence, la connexion « à chaud » du module de compensation 1 provoquerait la disjonction de ces modules d'alimentation 2.

Lors de la détection d'une microcoupure, le contrôleur 10 détecte une baisse du niveau de tension sur le rail principal d'alimentation P12V au moyen d'un comparateur à seuil et réagit en moins de quelques µs par la fermeture de l'interrupteur de puissance 11. La résistance interne des éléments capacitifs de stockage 12 et de l'interrupteur de puissance 11 est déterminée pour que le rail principal d'alimentation P12V se stabilise juste au niveau d'un premier seuil VT1. Pendant un temps déterminé T1, qui en général est de quelques ms, les éléments capacitifs de stockage 12 fournissent à la carte mère de l'ordinateur sa puissance nominale. Au-delà de T1, le contrôleur 10 envoie le signal PROCHOT qui demande aux microprocesseurs de la carte mère de passer en mode basse consommation. Avec les microprocesseurs disponibles à ce jour, la réduction de puissance peut atteindre -80% par rapport à la puissance nominale. Le temps de réponse T2 de cette baisse de charge est inférieur à 1ms. Dès que la microcoupure se termine, la tension d'alimentation P12V retourne à sa valeur nominale du fait que les modules d'alimentation 2 ont redémarré et qu'ils sont à nouveau capables d'alimenter normalement la carte mère. Pendant les secondes qui suivent la microcoupure, l'étage abaisseur 15 du convertisseur principal 16 recharge les éléments capacitifs de stockage 12 à leur tension nominale. La durée de recharge est proportionnelle à la durée effective de la microcoupure.

Lors de la détection d'une coupure de l'alimentation extérieure du secteur avec sauvegarde des données en mémoire non volatile, le contrôleur 10 détecte une baisse du niveau de tension sur le rail principal d'alimentation P12V au moyen d'un comparateur à seuil et réagit en moins de quelques µs par la fermeture de l'interrupteur de puissance 11. La résistance interne des éléments capacitifs de stockage 12 et de l'interrupteur de puissance 11 sont déterminés pour que le rail principal d'alimentation P12V se stabilise juste au niveau de ce premier seuil VT1. Pendant un temps déterminé T1, qui en général est de quelques ms, les éléments capacitifs de stockage 12 fournissent à la carte mère sa puissance nominale. Au-delà de T1, le contrôleur 10 envoie le signal PROCHOT qui demande aux microprocesseurs de la carte mère de passer en mode basse consommation. Avec les microprocesseurs disponibles à ce jour, la réduction de puissance peut atteindre -80% par rapport à la puissance nominale. Le temps de réponse T2 de cette baisse de charge est inférieur à 1ms. Pendant un temps déterminé T3, au-delà de T1+T2, le contrôleur 10 fait l'hypothèse que la baisse du signal P12V a pour origine une microcoupure et attend. Pendant son attente, si, au bout de T1+T2+T3, la tension du signal P12V n'est pas remontée au-dessus du premier seuil VT1, le contrôleur 10 passe dans la phase sauvegarde des données sur mémoire non volatile. A cet instant, le contrôleur ouvre l'interrupteur de puissance 11, ce qui a pour effet de faire chuter la tension du signal P12V au-dessous du premier seuil VT1. Les éléments capacitifs de stockage 12 sont donc isolés du rail principal d'alimentation P12V et l'énergie restante va servir à alimenter le rail de secours VMBK pendant la sauvegarde des données sur mémoire non volatile. Au-delà de T1+T2+T3, et pendant un temps T4 le convertisseur 13 génère une tension régulée de 12V sur le rail de secours VMBK. La topologie particulière de ce convertisseur 13 permet de garantir la stabilité de la tension de sortie aussi bien si la valeur de tension sur le rail de puissance VCAP est inférieure à la valeur de tension sur le rail de secours VMBK que si cette valeur de tension sur le rail de puissance VCAP est supérieure à la valeur de tension sur le rail de puissance VMBK. Ainsi, le système fonctionne même dans le cas de faible charge où la valeur de la tension sur le rail de puissance VCAP ne serait pas descendue au-dessous du premier seuil VT1 à la fin de la période T1+T2+T3.

Le module de compensation 1 ne possède pas de condensateur de masse (« bulk » en langue anglaise) sur le rail principal d'alimentation P12V pour ne pas perturber la tension dans les opérations d'échange « à chaud ». Par contre, les circuits de la carte mère sont conçus de telle manière que le rail de secours VMBK puisse comporter des condensateurs de sortie, nécessaires au bon fonctionnement du convertisseur 13. En effet, les diodes du convertisseur 4 de type ORing monté entre les deux tronçons VMBK et VBAT du rail de secours (seulement visibles sur la figure 1) bloquent tout appel de courant sur le rail principal d'alimentation P12V de la carte mère pendant l'insertion « à chaud ».

En résumé, le module de compensation, représenté sur la figure 1, remplit deux fonctions, à savoir la compensation d'alimentation lors des microcoupures d'alimentation secteur et la fourniture d'une alimentation de secours aux mémoires duales pendant les sauvegardes de données suite à une coupure d'alimentation secteur, le tout pour une structure et une complexité du système qui reste relativement simple, donc relativement peu coûteuse.

Le module de compensation 1 peut fournir une tension soutenue à la carte mère pour les circuits critiques pendant les phases de défaut d'alimentation, c'est-à-dire pour les circuits qui limitent l'impact de la perte de puissance vis à vis de l'ensemble des mémoires non volatiles. Ceci améliore la fiabilité du système. Les éléments capacitifs de stockage 12, et en particulier les super condensateurs, ont un meilleur rendement énergétique que certains autres systèmes de type alimentation non interruptible. Ceci réduit donc la consommation électrique globale du système.

Le module de compensation 1 présente en particulier la propriété intéressante d'être échangeable « à chaud », c'est à dire sans arrêter le système. En effet, au cours d'une extraction subite ou « à chaud » du module de compensation 1, le contrôleur 10 reste auto alimenté par l'énergie résiduelle contenue dans les éléments capacitifs de stockage 12. Cette auto alimentation temporaire permet de gérer au mieux le cycle de décharge au travers de la résistance de décharge 21 en indiquant clairement à l'opérateur de maintenance que la décharge n'est pas complète. Des indicateurs appropriés, par exemple des diodes électroluminescentes, signalent le danger d'énergie restante et permettent donc à l'opérateur de maintenance d'attendre le bon moment avant d'intervenir à l'intérieur du module de compensation pour y réaliser sa maintenance. Ceci améliore la sécurité électrique du système.

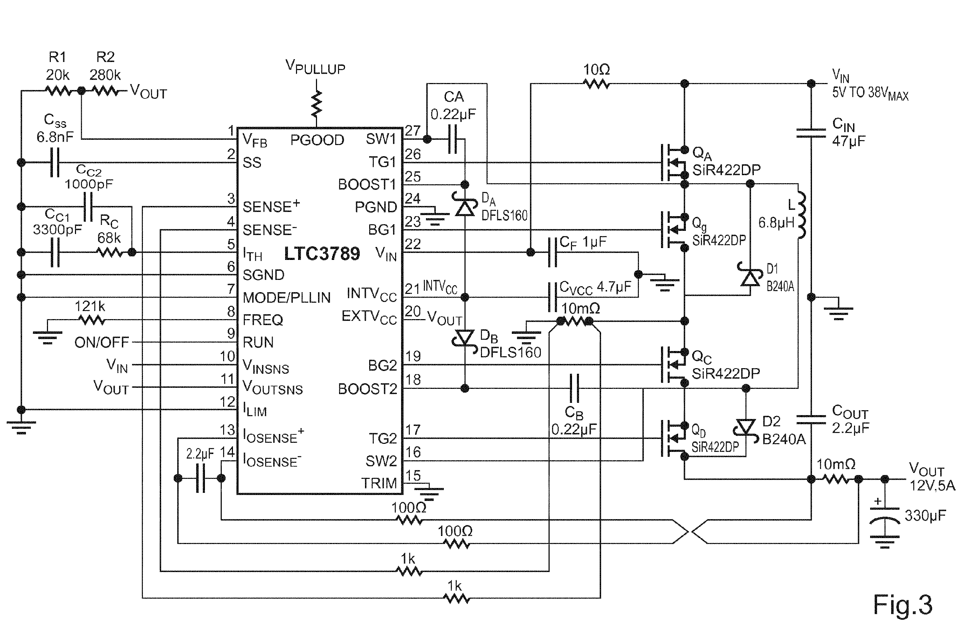

La figure 3 représente schématiquement un exemple convertisseur de tension continue en tension continue selon un mode de réalisation de l'invention. Le schéma électrique étant auto-explicatif, car comportant toutes les références de composant et toutes les valeurs numériques, ne sera pas décrit en plus grand détail. Ce circuit électrique représente un exemple de la circuiterie interne utilisable pour le convertisseur 13 alimentant le rail de secours 8 sur lequel circule le signal VMBK d'une valeur de 12V.

Certains scénarios vont maintenant être décrits. Ces scénarios utilisent les exemples préférentiels d'ordinateur et de module de compensation décrits, avec les valeurs numériques préférentielles données. Ces scénarios donnent des résultats chiffrés en termes de consommation électrique et de réserve de stockage d'énergie électriques. Dans ces scénarios, les éléments capacitifs de stockage sont des super condensateurs, et seront dénommés comme tels.

Dans un premier scénario de fonctionnement normal, l'ensemble dissipe en régime normal 860W, ce qui conduit en tenant compte du rendement des convertisseurs, qui est d'environ 80%, et de la consommation propre des dispositifs de refroidissement, qui est d'environ 200W, à un serveur consommant 1300W. La réserve d'énergie est constituée par l'ensemble des super condensateurs de cinq cellules de 2000F en série, soit 400F équivalents, chargé sous 12,5V. En négligeant la résistance parasite des interrupteurs de transfert et des super condensateurs 12, la valeur utilisable de l'énergie stockée est donc égale à 1/2*C*V² = 31250J. Les convertisseurs de tension continue en tension continue situés entre le rail de puissance VCAP et les rails d'alimentation, principal comme de démarrage, de 12V, ainsi que le rail de secours du signal VBAT, sont considérés comme ayant un rendement moyen de 70%, cette valeur étant limitée par la résistance interne des super condensateurs 12 eux-mêmes. Alors, une consommation de 1300W pendant 4ms sera responsable d'une réduction de l'énergie stockée égale à 1300*0.004/0.7 ∼ 7,5J.

Soit un deuxième scénario de la détection d'une microcoupure de durée égale à 250ms, qui affecte simultanément les deux entrées AC des deux modules d'alimentation 2, AC1 et AC2. Le cas où un seul est affecté est trivial puisque les deux modules d'alimentation 2 sont en redondance 1+1 et qu'alors l'un prendrait le relais de l'autre. Après une demi-alternance, durant 10ms au maximum, les signaux AC_FAIL sont transmis par les modules d'alimentation 2 au contrôleur 10 du module de compensation 1. Le contrôleur 10 envoie aux microprocesseurs un signal de requête de basse puissance (LPRQ pour « Low Power Request » en langue anglaise) qui, dans le cas d'un socket Intel Xeon sur une plateforme Brickland peut être reçu par sa broche bidirectionnelle PROCHOT#. Quand le signal est activé par la plateforme, le microprocesseur réduit sa consommation en moins de 1ms à un premier niveau de puissance « Pₜₕᵣₒₜₜₗₑ », puis, en moins de 4ms à un second niveau « PL2 » de puissance configurable par le « BIOS setting ». Cette broche peut être avantageusement configurée en mode « Fast PROCHOT # » qui permet d'obtenir la première réaction sur la consommation en moins de 100µs.

Dans ce deuxième scénario, la consommation d'énergie sur les super condensateurs 12 est déterminée par le réglage du niveau « PL2 » et par la consommation résiduelle de la plateforme au travers de ses entrées sorties et de ses mémoires. La consommation du système analysé est, dans cet état « PL2 », de l'ordre de 250W. Les fréquences des horloges des microprocesseurs ont pu être mises à leur valeur minimale, par conséquent l'activité mémoire et entrée sortie est aussi réduite à son minimum. Les ventilateurs de refroidissement peuvent de manière optionnelle être momentanément stoppés par le contrôleur 10, l'inertie thermique des radiateurs permettant une telle opération sans risque de surchauffe des circuits électriques. La consommation d'énergie sur la réserve de 28800J est encore très faible dans ce cas. Elle s'élève en effet à 7,5 + 87,8 = 95,3J soit moins de 0,3% de l'énergie stockée. La tension finale sur l'ensemble des super condensateurs 12 sera quasiment inchangée.

Soit un troisième scénario de la détection d'une microcoupure de durée comprise entre 250 et 800ms. Le système va décider, au bout de 250ms de démarrer la sauvegarde de la mémoire volatile 32 dans la mémoire non volatile 33 à l'intérieur de la mémoire duale 31, tout en gardant la possibilité de redémarrer instantanément l'exploitation au cas où le secteur revient avant l'expiration de la durée de 800ms. Le système d'exploitation (OS pour « Operating System » en langue anglaise) est stoppé et tous les caches sont « flushés », c'est-à-dire imagés, c'est-à-dire convertis rapidement en mémoire vive (DRAM pour « Dynamic Random Access Memory » en langue anglaise). Cette opération est très brève, typiquement inférieure à 1ms. A partir de ce point, seule la mémoire consomme pour recopier l'image dans la mémoire non volatile, pour une valeur égale à 240W. La vitesse d'écriture étant de 4GB par 30s par mémoire duale 31, seule une faible partie de l'image sera recopiée en 800ms. La consommation d'énergie sur la réserve de 31250J s'élève 7,5 + 87,8 + 188,5 = 284J soit moins de 1% de l'énergie stockée. La tension finale sur l'ensemble des super condensateurs 12 sera donc égale à 12,44V

Soit un quatrième scénario de la détection d'une coupure d'alimentation secteur de durée supérieure à 800ms. La durée de 800ms étant dépassé, le contrôleur de gestion va perdre le contrôle du système et les mémoires duales 31 vont finir la sauvegarde des données en mode autonome. Si le secteur est rétabli avant la fin de cette sauvegarde, cette sauvegarde restera toutefois prioritaire sur la reprise en main par le contrôleur qui devra attendre la fin des écritures en mémoire non volatile pour des raisons de cohérence de l'image mémoire. Les ventilateurs de refroidissement doivent ici être stoppés par le contrôleur 10 pour éviter de consommer une puissance inutile sur la réserve d'énergie. En conservant une vitesse d'écriture de 4GB par 30s par mémoire duale 31, la durée de l'opération de sauvegarde étant au maximum égale à 30s puisque les 48 mémoires duales 31 opèrent en parallèle, la consommation d'énergie sur la réserve de 31250J s'élève donc à 7,5 + 87,8 + 188,5 + 7200J = 7484J soit environ 25% de l'énergie stockée. La tension finale sur l'ensemble des super condensateurs 12 sera donc égale à 10,9V. Il reste même encore de la marge pour supporter des mémoires duales 31 de capacité supérieure.

Soit un cinquième scénario d'un remplacement à chaud d'un module de compensation 1. Le module de compensation 1 extractible est retiré par l'opérateur de maintenance sans intervention du contrôleur de gestion. Ce mode est parfois appelé extraction subite ou extraction « à chaud » (« surprise hot remove » en langue anglaise). Cependant, pour éviter de perdre des données de sauvegarde, un voyant lumineux, par exemple de type diode électroluminescente, visible de l'opérateur, signale toute opération de sauvegarde en cours. L'opérateur devra donc attendre l'extinction de ce voyant avant d'effectuer cette extraction subite. Le voyant étant éteint, dès que le module est écarté de son connecteur d'au plus 1mm, une broche courte se déconnecte du fond de panier et indique au contrôleur 10 embarqué que le module de compensation 1 est déconnecté du système. Comme le contrôleur 10 est autoalimenté par l'ensemble des super condensateurs 12, il force l'ouverture de l'interrupteur de puissance 11 pour éviter tout effet indésirable au moment de la séparation des broches de puissance sur le rail principal 9 d'alimentation de 12V. En outre, le contrôleur 10 peut exécuter automatiquement les opérations de décharge de l'énergie pour permettre une intervention de réparation sur le module de compensation 1 sans danger pour l'opérateur de maintenance. L'interrupteur de puissance 11 reste ouvert tant que la tension résiduelle reste supérieure à une valeur, très basse, de la tension sur le rail de puissance VCAP. A la réinsertion d'un nouveau module, donc non chargé, le contrôleur 10 s'alimente à partir de l'entrée de puissance de 12V et permet donc une charge de l'ensemble des super condensateurs 12 dans des conditions contrôlées de courant. Cette limite de courant, par exemple 3% du courant maximal des modules d'alimentation 2, permet une recharge du module de compensation 1 sans nécessiter de modules d'alimentation 2 surdimensionnées en courant de sortie.

Bien entendu, la présente invention n'est pas limitée aux exemples et au mode de réalisation décrits et représentés, mais elle est susceptible de nombreuses variantes accessibles à l'homme de l'art.

## Revendications

1. Module de compensation de microcoupures d'alimentation électrique d'au moins un serveur, comprenant au moins un élément capacitif de stockage (12) d'énergie électrique ensuite libérable pour compenser lesdites microcoupures, **caractérisé en ce qu'**il comporte aussi un contrôleur (10) de la charge et/ou de la décharge dudit élément capacitif de stockage (12), limitant le courant de charge et/ou de décharge dudit élément capacitif de stockage (12) suffisamment pour rendre ledit module insérable et/ou extractible même pendant le fonctionnement dudit serveur.

2. Module de compensation de microcoupures d'alimentation électrique selon la revendication 1, **caractérisé en ce qu'**il comporte aussi un interrupteur d'alimentation auxiliaire (19) reliant ledit contrôleur (10) audit élément capacitif de stockage (12) et changeant d'état, lors de l'extraction dudit module pendant le fonctionnement dudit serveur, de manière à ce que ledit contrôleur (10) soit alimenté par ledit élément capacitif de stockage (12).

3. Module de compensation de microcoupures d'alimentation électrique selon la revendication 1 ou 2, **caractérisé en ce qu'**il comporte aussi un interrupteur de décharge (24) qui relie une résistance de décharge (21) audit élément capacitif de stockage (12) et qui est piloté par ledit contrôleur (10) lors de l'extraction dudit module pendant le fonctionnement dudit serveur.

4. Module de compensation de microcoupures d'alimentation électrique selon l'une quelconque des revendications précédentes, **caractérisé en ce qu'**il comprend plusieurs éléments capacitifs de stockage (12) et/ou **en ce qu'**il compense les microcoupures d'alimentation survenant sur un rail d'alimentation (5) de un ou de plusieurs serveurs.

5. Module de compensation de microcoupures d'alimentation électrique selon l'une quelconque des revendications précédentes, **caractérisé en ce que** le ou les éléments capacitifs de stockage (12) sont disposés de manière à fournir une alimentation électrique de secours à la fois lors d'une microcoupure et lors d'une sauvegarde du contenu d'une ou plusieurs mémoires volatiles vers une ou plusieurs mémoires non volatiles.

6. Module de compensation de microcoupures d'alimentation électrique selon l'une quelconque des revendications précédentes, **caractérisé en ce que** le ou les éléments capacitifs de stockage (12) comprennent un ou plusieurs super condensateurs.

7. Module de compensation de microcoupures d'alimentation électrique selon l'une quelconque des revendications précédentes, **caractérisé en ce qu'**il comporte une première borne d'alimentation (22) qui est destinée à être reliée à une alimentation extérieure (5) et qui est reliée audit élément capacitif de stockage (12) de manière à permettre leur charge en provenance de ladite première borne d'alimentation (22) et leur décharge vers ladite première borne d'alimentation (22) et une deuxième borne d'alimentation (23) qui est destinée à être reliée à ladite alimentation extérieure (5) et qui est reliée audit contrôleur (10) de manière à alimenter en énergie électrique ledit contrôleur (10).

8. Module de compensation de microcoupures d'alimentation électrique selon la revendication 7, **caractérisé en ce qu'**il ne comporte aucune capacité de découplage qui est reliée à ladite première borne d'alimentation (22) et dont la valeur dépasse 500 nanofarads.

9. Module de compensation de microcoupures d'alimentation électrique selon l'une quelconque des revendications précédentes, **caractérisé en ce qu'**il comporte une première borne d'alimentation (22) qui est destinée à être reliée à une alimentation extérieure (5), un convertisseur principal (16) de tension continue en tension continue qui est situé entre ledit élément capacitif de stockage (12) et ladite première borne d'alimentation (22) et qui comprend un limiteur de courant intégré lequel est activé lors de l'insertion dudit module pendant le fonctionnement dudit serveur.

10. Module de compensation de microcoupures d'alimentation électrique selon l'une quelconque des revendications précédentes, **caractérisé en ce qu'**il comporte une deuxième borne d'alimentation (23) qui est destinée à être reliée à une alimentation extérieure (5), un convertisseur secondaire (20) de tension continue en tension continue et un limiteur de courant (19) qui sont situés entre ledit contrôleur (10) et ladite deuxième borne d'alimentation (23).

11. Module de compensation de microcoupures d'alimentation électrique selon l'une quelconque des revendications précédentes, **caractérisé en ce que** ledit contrôleur (10) comprend une fonction de détection d'une extraction subite dudit module laquelle fonction est reliée à une broche qui est plus courte que les autres broches de manière à indiquer l'opération d'extraction subite avant que celle-ci ne soit complètement réalisée.

12. Module de compensation de microcoupures d'alimentation électrique selon l'une quelconque des revendications précédentes, **caractérisé en ce que** ledit contrôleur (10) comprend une fonction de détection desdites microcoupures laquelle fonction envoie une ou plusieurs demandes de réduction de consommation électrique à un ou plusieurs serveurs dès qu'une microcoupure est détectée.

13. Module de compensation de microcoupures d'alimentation électrique selon l'une quelconque des revendications précédentes, **caractérisé en ce qu'**il est insérable et/ou extractible même pendant le fonctionnement dudit ou desdits serveurs.

14. Module de compensation de microcoupures d'alimentation électrique selon l'une quelconque des revendications précédentes, **caractérisé en ce que** ledit ou au moins certains desdits serveurs comprennent chacun un ou plusieurs microprocesseurs et/ou une ou plusieurs mémoires.

15. Ordinateur comprenant :
- un ou plusieurs microprocesseurs,
- plusieurs mémoires duales (31) comprenant chacune une mémoire vive (32), une mémoire non volatile (33), et un contrôleur (34) adapté pour sauvegarder le contenu de la mémoire vive (32) dans la mémoire non volatile (33) et pour reconfigurer la mémoire vive (32) avec le contenu de la mémoire non volatile (33),
- un rail principal (9) d'alimentation électrique desdits microprocesseurs et desdites mémoires duales (31) pendant le fonctionnement dudit ordinateur sans microcoupure d'alimentation, destiné à être relié à une alimentation extérieure (5),
- un rail secondaire (6, 8) d'alimentation électrique desdites mémoires duales (31) pendant le fonctionnement dudit ordinateur au moins lors du dépassement d'une durée prédéterminée de microcoupure d'alimentation, ledit rail secondaire (6, 8) d'alimentation n'alimentant pas les microprocesseurs,
- un module de compensation (1) de microcoupures d'alimentation électrique tel que revendiqué dans l'une quelconque des revendications 1-14, dans lequel l'élément capacitif de stockage (12) d'énergie électrique est adapté pour fournir de l'énergie électrique, audit rail principal (9) d'alimentation, lors des microcoupures d'alimentation, mais uniquement pendant ladite durée prédéterminée de microcoupure d'alimentation, et est aussi adapté pour fournir de l'énergie électrique, audit rail secondaire (6, 8) d'alimentation, lors des microcoupures d'alimentation, après le dépassement de ladite durée prédéterminée de microcoupure d'alimentation.

16. Ordinateur selon la revendication 15, **caractérisé en ce que** ladite mémoire vive (32) est une mémoire DRAM et **en ce que** ladite mémoire non volatile (33) est une mémoire FLASH.

17. Ordinateur selon l'une quelconque des revendications 15 à 16, **caractérisé en ce que** ledit ordinateur est un supercalculateur comprenant plusieurs microprocesseurs.
